# EUROPÄISCHE PATENTSCHRIFT

(11) **EP 2 873 137 B1**
(45) Veröffentlichungstag und Bekanntmachung des Hinweises auf die Patenterteilung: **14.10.2020**
(21) Anmeldenummer: 13748276.6
(22) Anmeldetag: 24.07.2013
(51) Int. Cl.: H02K 1/32, H02K 9/06, H02K 1/27

(54) **ROTOR EINER ELEKTRISCHEN MASCHINE UND ELEKTRISCHE MASCHINE**
ROTOR OF AN ELECTRICAL MACHINE AND ELECTRICAL MACHINE
ROTOR DE MACHINE ÉLECTRIQUE ET MACHINE ÉLECTRIQUE

(30) Priorität: 31.08.2012 DE 102012215503
(43) Veröffentlichungstag der Anmeldung: 20.05.2015
(73) Patentinhaber: Siemens Aktiengesellschaft, 80333 München (DE)
(72) Erfinder: WETZEL, Wolfgang, 91074 Herzogenaurach (DE)
(86) Internationale Anmeldenummer: PCT/EP2013/065612
(87) Internationale Veröffentlichungsnummer: WO 2014/032868

(56) Entgegenhaltungen:
- EP-A1- 1 722 462
- DE-A1- 19 711 750
- JP-A- 2001 061 257
- SU-A1- 1 737 632

## Beschreibung

Die vorliegende Erfindung betrifft einen Rotor einer elektrischen Maschine.

Der Rotor kann ein drehfest mit einer Rotorwelle des Rotors verbundenes Rotorblechpaket aufweisen, wobei das Rotorblechpaket sich in Richtung einer Rotationsachse des Rotorblechpakets gesehen von einer ersten axialen Stirnseite des Rotorblechpakets zu einer zweiten axialen Stirnseite des Rotorblechpakets erstreckt.

Die vorliegende Erfindung betrifft weiterhin eine elektrische Maschine, wobei die elektrische Maschine einen Stator und einen Rotor aufweist, wobei der Rotor in Lagern gelagert ist, so dass er um eine Rotationsachse des Rotors rotierbar ist.

Eine Aufgabe der Erfindung ist es, einen Rotor einer elektrischen Maschine mit einem Lüfter auszubilden, dessen Betriebsverhalten verbessert ist.

Aus der EP 1 722 462 A1 ist eine elektrische Maschine bekannt, bei der ein separater Lüfter in Form eines Axiallüfters vorgesehen ist, der in die zentrale Öffnung eines Innenläufers eingesetzt wird. Verbindungselemente zwischen dem Läufer und dem zentralen Befestigungselement in der Öffnung sind derart vorgesehen, dass sich vier offene Abschnitte ergeben, in denen die einzelnen Lüfterelemente im montierten Zustand angeordnet sind.

Die Aufgabe wird durch einen Rotor mit den Merkmalen des Anspruchs 1 gelöst. Vorteilhafte Ausgestaltungen des Rotors bzw. einer entsprechenden elektrischen Maschine sind Gegenstand der abhängigen Ansprüche 2 bis 10.

Ein Rotor einer elektrischen Maschine weist ein Rotorblechpaket auf. Ein Lüfter ist stirnseitig im Bereich des Rotorblechpaketes angeordnet. Der Lüfter weist einen Lüfterflügel auf. Der Lüfterflügel befindet sich an und/oder auf einem Tragelement. Dieses Tragelement kann ringförmig ausgebildet sein. Demnach kann es sich beim Tragelement um eine Ringscheibe handeln. Damit ist eine Art Lüftertragscheibe für einen oder eine Vielzahl von Lüfterflügeln ausgebildet. Die Vielzahl von Lüfterflügeln auf dem Tragelement können in Umfangsrichtung symmetrisch angeordnet sein.

Die Struktur eines rotierenden Lüfters wird u.a. durch Fliehkräfte belastet. Insbesondere bei Lüftern aus Dünnblech führen diese Fliehkräfte zu einem Biegemoment an den Befestigungsstellen der Lüfterschaufeln (Lüfterflügel) am Lüftertragring (Tragelement), so dass unter Umständen eine zulässige mechanische Spannungen in diesen Bereichen im Nominalbetrieb der elektrischen Maschine überschritten wird, was ein Bauteilversagen zur Folge haben kann.

Zur Verbesserung der Festigkeit von angeschweißten Lüfterflügeln können unterschiedliche Maßnahmen getroffen werden. Hierzu zählen eine verbesserte Ausgestaltung der Schweißnaht, die Materialwahl, die Wahl Materialstärke, die Zahl und/oder Gestaltung der Lüfterflügel, usw.

Ein Lüfterflügel und/oder eine Vielzahl von Lüfterflügeln ist erfindungsgemäss derart ausgestaltet, dass dieser einen ersten Abschnitt und einen zweiten Abschnitt aufweist. Der erste Abschnitt befindet sich vom Tragelement aus betrachtet in einer ersten axialen Richtung und der zweite Abschnitt befindet sich vom Tragelement aus betrachtet in einer zweiten axialen Richtung. Die axialen Richtungen betreffen die Rotationsachse der elektrischen Maschine und damit auch die Rotationsachse des Rotors. Die erste axiale Richtung ist der zweiten axialen Richtung entgegengesetzt. Der Rotor ist erfindungsgemäss derart ausgebildet, dass sich die Abschnitte (Erster und Zweiter) axial über das Tragelement hinaus erstrecken.

Für eine Verbindung zwischen Lüfterflügel und Tragelement ist erfindungsgemäss das Tragelement mit dem Lüfterflügel verschweißt oder verklebt, wobei der Masseschwerpunkt des Lüfterflügels in einem mittigen Bereich einer Klebeverbindung bzw. Schweißverbindung ist, wobei die Verbindung eine radiale Ausrichtung aufweist und wobei die Masse des ersten Abschnitts und die Masse des zweiten Abschnitts einen Massenschwerpunkt ergeben, welcher im Bereich des Tragelementes liegt.

Der Schwerpunkt der Masse eines Lüfterflügels befindet sich axial zwischen den axialen Endbereichen des Lüfterflügels. Liegt der Schwerpunkt der Lüfterschaufel nicht in der Ebene der Tragscheibe oder nahe bei dieser Tragscheibe (Ebene) können die am Schwerpunkt der Schaufel angreifenden Fliehkraft ein Moment an der Befestigungsstelle am Tragelement hervorrufen, das zu unzulässig hohen mechanischen Spannungen führen kann. Aufgrund eines oft beengten Bauraums außerhalb des Läuferblechpakets ist nicht einfach Maßnahmen zur Verlagerung des Schwerpunktes hin zur Ebene des Tragelementes zu finden.

Vorteilhaft ist eine Position des Schwerpunktes, welcher biegemomentneutral ist.

Um also die Verbindung des Lüfterflügels mit dem Tragelement im Betrieb des Rotors möglichst geringen mechanischen Belastungen auszusetzen, kann der Masseschwerpunkt (Schwerpunkt) möglichst nahe am Tragelement positioniert sein.

In einer erfindungsgemässen Ausgestaltung des Rotors ist die Masse des ersten Abschnitts und die Masse des zweiten Abschnitts derart verteilt, dass sich für die Abschnitte eines gemeinsamen Flügels ein Massenschwerpunkt ergibt, welcher im Bereich des Tragelementes liegt, wobei dies einen axialen Bereich und/oder einen radialen Bereich betrifft. Das Tragelement ist beispielsweise eine Ringscheibe, welche in einem äußeren Bereich Lüfterflügel aufweist.

Die Form der Lüfterschaufel (Lüfterflügel) ist also so zu beeinflussen, dass die im Schwerpunkt angreifende Fliehkraft kein Biegemoment oder ein reduziertes Biegemoment an der Befestigungsstelle verursacht. So kann als Lüfter auch ein Radiallüfter aus Dünnblech verwendet werden. Die Verwendung von Dünnblech erlaubt z.B. eine günstige Fertigung, ein geringes Gewicht, eine gute Wuchtbarkeit.

In einer Ausgestaltung des Rotors weist das Rotorblechpaket stirnseitig eine Ausnehmung auf. Das Rotorblechpaket kann stirnseitig auch eine Vielzahl von Ausnehmungen aufweisen, wobei diese vorteilhaft eine rotationssymmetrische Position aufweisen. Die Ausnehmung kann ein Kühlkanal sein, welcher sich von einer Stirnseite des Rotorblechpaketes zu der anderen Stirnseite des Rotorblechpakets erstreckt. In die Ausnehmung erstreckt sich ein Teil des Lüfterflügels. Dieser Teil ist insbesondere der zweite Abschnitt des Lüfterflügels, welcher der Stirnseite des Rotorblechpaketes zugewandt ist. Damit können verschiedene Vorteile erzielt werden. Ragt der zweite Abschnitt in die Ausnehmung des Rotorblechpaketes hinein, so kann der Schwerpunkt des Lüfterflügels auch dann in Richtung des Rotorblechpaketes verlagert sein, wenn sich das Tragelement nahe an der Stirnseite des Rotorblechpaketes befindet und der Abstand zwischen Tragelement und Stirnseite klein ist. Ragt der zweite Abschnitt des Lüfterflügels in einen Kühlkanal, so kann schon im Kühlkanal Wärme an einen Wärme leitenden Lüfterflügel abgegeben werde. Der Lüfterflügel weist als Material insbesondere Eisen auf (insbesondere ist er aus Dünnblech gefertigt). Ist auch das Tragelement aus einem Material, welches Eisen aufweist, so dient auch dieses Tragelement der zusätzlichen Entwärmung. Erstreckt sich also in einer Ausgestaltung des Rotors die Ausnehmung von einer ersten axialen Stirnseite zu einer zweiten axialen Stirnseite um einen Kühlkanal auszubilden, wobei der Rotor eine Vielzahl dieser Kühlkanäle aufweisen kann, dann ist es möglich die Kühlung des Rotors durch in den Kühlkanal ragende Wärme leitende Elemente zu verbessern. Die wärmeleitenden Elemente können Teil eines Lüfterflügels sein.

Wenn es also für den Lüfter nur einen begrenzten Bauraum (z.B. wegen: Kollision mit stehenden Bauteilen, Wuchtbarkeit des Lüfters, Montage etc.) gibt ist es vorteilhaft für eine biegemomentneutrale Befestigung der Lüfterschaufeln auf dem Lüftertragring den unteren vorderen Bereich der Lüfterschaufeln in die Kühlkanäle des Läuferblechpakets hinein zu verlängern. Dadurch kann der Schwerpunkt der Schaufel in die Ebene der Tragscheibe verschoben werden, so dass eine biegemomentneutrale Befestigung möglich wird. Hierdurch sinken Spannungen im Bauteil. Durch die beschriebene Flügelgestaltung brauchen keine negativen Auswirkungen auf die Förderwirkung oder die Akustik des Lüfters befürchtet werden.

In einer Ausgestaltung des Rotors ist der Querschnitt des Kühlkanals im Rotor in dem Bereich axial unverändert, in dem sich der zweite Abschnitt des Lüfterflügels in den Kühlkanal erstreckt. Dies ist insbesondere bei einfachen geometrischen Formen der Fall, welche leicht zu realisieren sind.

In einer erfindungsgemässen Ausgestaltung des Rotors ist das Tragelement mit dem Lüfterflügel verschweißt und/oder verklebt. Diese Schweiß- und/oder Klebeverbindung kann dabei sowohl den ersten Abschnitt des Lüfterflügels, wie auch den zweiten Abschnitt des Lüfterflügels betreffen. Ist der Schwerpunkt des Lüfterflügels nahe am Tragelement, so ergeben sich geringere Belastungen der Verbindung zwischen Lüfterflügel und Tragelement. Dies kann die Haltbarkeit der Verbindung (Schweißverbindung und/oder Klebeverbindung) positiv beeinflussen.

In einer erfindungsgemässen Ausgestaltung des Rotors befindet sich der Masseschwerpunkt des Lüfterflügels (bzw. der Lüfterflügel) in einem mittigen Bereich der Klebeverbindung bzw. der Schweißverbindung, wobei die Verbindung eine radiale Ausrichtung aufweist. Auch damit lässt sich eine Beanspruchung der Verbindung reduzieren.

In einer Ausgestaltung des Rotors ist der Lüfterflügel als Blechteile ausgebildet. Der oder die Lüfterflügel lassen sich beispielsweise auf eine Ringscheibe aufstecken um diese nach deren Positionierung dort zu verkleben bzw. zu verschweißen. In einer Ausgestaltung sind die Lüfterflügel von radial innen nach radial außen auf die Ringscheibe aufgesteckt. Dadurch ergibt sich eine vereinfachte Halterung der Lüfterflügel an der Ringscheibe (Tragelement).

In einer Ausgestaltung des Rotors weist der Lüfterflügel außerhalb und innerhalb der Ausnehmung eine unterschiedliche Dicke auf. Durch diesen Freiheitsgrad der Wahl der Dicke der Abschnitte bzw. des Lüfterflügels lässt sich auf einfache Weise die Lage des Schwerpunktes variieren.

In einer Ausgestaltung des Rotors weist der zweite Abschnitt eine Dicke auf, welche kleiner ist als die Dicke des ersten Abschnitts. Dadurch kann erreicht werden, dass der axiale Querschnitt eines Kühlkanals nicht unnötig verkleinert wird. Als Ausgleich für eine geringere Dicke, kann der in das Rotorblechpaket ragende Teil des zweiten Abschnitts länger ausgebildet sein.

In einer Ausgestaltung des Rotors weist der Lüfterflügel einen gewölbten Endbereich auf, wobei der Endbereich in einem Abschnitt der Erstreckung des zweiten Abschnitts in die Ausnehmung liegt. Der gewölbte Endbereich liegt also insbesondere im Kühlkanal. Mit der Wölbung kann die Anströmung im Kühlkanal verbessert werden. Durch weniger Verwirbelungen ist die Kühlwirkung optimierbar, bzw. wird diese nicht negativ durch das Material im Kühlkanal beeinflusst.

In einer Ausgestaltung der Erfindung ist ein Rotor der beschriebenen Ausgestaltungen in eine elektrische Maschine integriert, welche einen dem Rotor zugeordneten Stator aufweist, wobei die elektrische Maschine ein Traktionsmotor eines Fahrzeugs ist. Beispiele für Fahrzeuge sind Lastkraftwagen, Autos, Straßenbahnen, usw.

Der Lüfter einer elektrischen Maschine, insbesondere in einem Fahrzeug, kann fest mit dem Rotor der elektrischen Maschine verbunden sein, wobei das Rotorblechpaket um die Rotationsachse herum verteilt weitere Ausnehmungen aufweist, die sich in Richtung der Rotationsachse gesehen von der ersten axialen Stirnseite zur zweiten axialen Stirnseite erstrecken. In die weiteren Ausnehmungen ist beispielsweise jeweils ein Zuganker eingeführt, der in Richtung der Rotationsachse gesehen über die axialen Stirnseiten hinausragt. Dabei können auf die Zuganker an beiden axialen Stirnseiten Befestigungselemente aufgesetzt sein, so dass die Rotorbleche des Rotorblechpakets aneinander gepresst werden, wobei an der ersten axialen Stirnseite des Rotorblechpakets auf die Zuganker der Lüfter aufgesetzt ist.

Weist das Rotorblechpaket eine Vielzahl von Rotorblechen auf, so können die Rotorbleche an ihrer von der Rotationsachse abgewandten Seite jeweils ein Joch und an ihrer der Rotationsachse zugewandten Seite jeweils eine Blechnabe aufweisen. In diesem Fall sind die Joche und die Blechnaben der Rotorbleche über jeweilige Blechspeichen miteinander verbunden. Vorzugsweise sind an der ersten axialen Stirnseite des Rotorblechpakets die Befestigungselemente zwischen der Stirnseite und dem Lüfter angeordnet. Vorzugsweise weist der Lüfter eine orthogonal zur Rotationsachse verlaufende Ringscheibe und die von der Ringscheibe abstehende Lüfterflügel auf. Die Ringscheibe kann an ihrer von der Rotationsachse abgewandten Seite einen Außenring und an ihrer der Rotationsachse zugewandten Seite eine Scheibennabe aufweisen. In diesem Fall sind die Lüfterflügel am Außenring angeordnet und sind der Außenring und die Scheibennabe über Scheibenspeichen miteinander verbunden.

Ist in einer Ausgestaltung die Scheibennabe auf die Zuganker aufgesetzt, ist es möglich, dass die Scheibennabe mit der Rotorwelle nicht drehfest verbunden ist. Die Scheibennabe dient in diesem Fall lediglich als Positionier- und Zentrierhilfe für den Lüfter bei der Montage.

Nachfolgend ist die Erfindung beispielhaft an Hand von Figuren schematisch näher erläutert. Dabei zeigt:
FIG 1 eine elektrische Maschine im Längsschnitt;
FIG 2 ein Rotorblech im Querschnitt;
FIG 3 einen Lüfter der elektrischen Maschine von FIG 1 quer zu einer Rotationsachse gesehen;
FIG 4 ein Fahrzeug mit einer elektrischen Maschine;
FIG 5 eine nicht zur Erfindung gehörende Ausführung eines Lüfterflügels;
FIG 6 eine Ausführung eines Lüfterflügels;
FIG 7 eine weitere Ausführung eines Lüfterflügels;
FIG 8 eine weitere Ausführung eines Lüfterflügels;
FIG 9 eine weitere Ausführung eines Lüfterflügels;
FIG 10 eine weitere Ausführung eines Lüfterflügels;
FIG 11 eine weitere Ausführung eines Lüfterflügels;

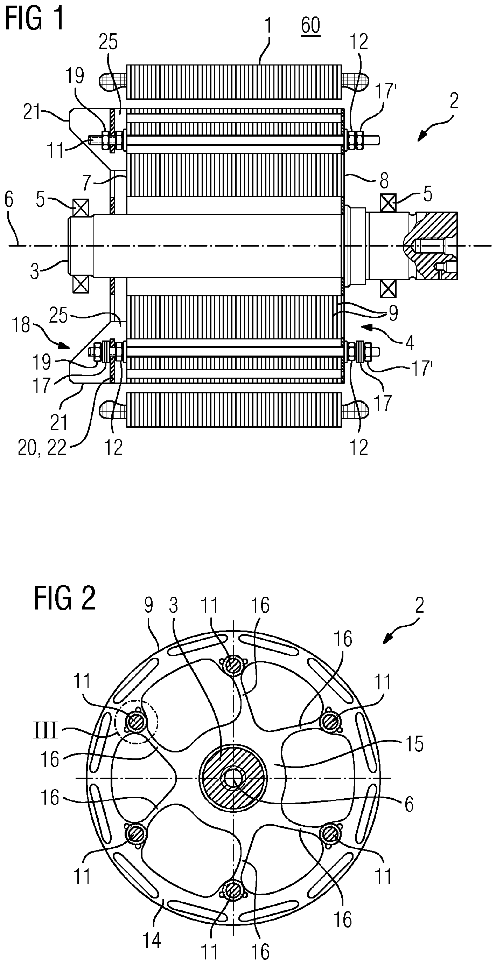

Die Darstellung gemäß FIG 1 zeigt eine elektrische Maschine 60 mit einem Stator 1 und einem Rotor 2. Der Rotor 2 weist eine Rotorwelle 3 und ein Rotorblechpaket 4 auf. Die Rotorwelle 3 ist in Lagern 5 gelagert, so dass die Rotorwelle 3 und mit ihr der gesamte Rotor 2 um eine Rotationsachse 6 der elektrischen Maschine rotierbar ist.

Soweit die Begriffe "axial", "radial" und "tangential" verwendet werden, sind sie auf die Rotationsachse 6 bezogen. Der Begriff "axial" bedeutet eine Richtung parallel zur Rotationsachse 6. Der Begriff "radial" bedeutet eine Richtung orthogonal zur Rotationsachse 6 auf die Rotationsachse 6 zu oder von ihr weg. Der Begriff "tangential" bedeutet eine Richtung orthogonal zur Rotationsachse 6 und orthogonal zur Radialrichtung, also in einem konstanten radialen Abstand von der Rotationsachse 6 kreisförmig um die Rotationsachse 6 herum.

In der Regel ist der Rotor 2 entsprechend der Darstellung von FIG 1 radial innerhalb des Stators 1 angeordnet. Die elektrische Maschine ist somit als Innenläufer ausgebildet. In Einzelfällen kann der Rotor 2 jedoch alternativ radial außerhalb des Stators 2 angeordnet sein. In diesem Fall ist die elektrische Maschine als Außenläufer ausgebildet.

Gemäß FIG 1 erstreckt sich das Rotorblechpaket 4 in Axialrichtung gesehen von einer ersten axialen Stirnseite 7 des Rotorblechpakets 4 zu einer zweiten axialen Stirnseite 8 des Rotorblechpakets 4. Das Rotorblechpaket 4 weist eine Vielzahl von Rotorblechen 9 auf, die in Axialrichtung aufeinander gestapelt sind.

Gemäß den FIG 1 und 2 weist das Rotorblechpaket 4 neben Ausnehmungen für z.B. Kühlkanäle weitere Ausnehmungen 10 auf. Die weiteren Ausnehmungen 10 sind gemäß FIG 2 um die Rotationsachse 6 herum verteilt angeordnet. Die weiteren Ausnehmungen 10 erstrecken sich in Axialrichtung durchgängig durch das Rotorblechpaket 4, also von der ersten axialen Stirnseite 7 zur zweiten axialen Stirnseite 8. In die weiteren Ausnehmungen 10 ist jeweils ein Zuganker 11 eingeführt. Die Zuganker 11 weisen eine größere Länge auf als das Rotorblechpaket 4. Die Zuganker 11 ragen somit axial über die Stirnseiten 7, 8 des Rotorblechpakets 4 hinaus.

Gemäß FIG 1 ist an der ersten axialen Stirnseite 7 des Rotorblechpakets 4 auf die Zuganker 11 ein Lüfter 18 aufgesetzt. Der Lüfter 18 kann entsprechend der Darstellung von FIG 1 insbesondere auf die an der ersten axialen Stirnseite 7 befindlichen Befestigungselemente 12 aufgesetzt sein. In diesem Fall sind somit die Befestigungselemente 12 zwischen der ersten Stirnseite 7 und dem Lüfter 18 angeordnet. Die Befestigung des Lüfters 18 auf den Zugankern 11 kann insbesondere mittels weiterer Befestigungselemente 19 erfolgen, beispielsweise mittels Schraubenmuttern 19.

FIG 2 zeigt eine mögliche Ausgestaltung der Rotorbleche 9. Insbesondere weisen gemäß FIG 2 die Rotorbleche 9 an ihrer von der Rotationsachse 6 abgewandten Seite jeweils ein Joch 14 und an ihrer der Rotationsachse 6 zugewandten Seite jeweils eine Blechnabe 15 auf. Die Joche 14 und die Blechnaben 15 der Rotorbleche 9 sind über jeweilige Blechspeichen 16 miteinander verbunden. Die Verwendung des Zusatzes "Blech-" bei der Bezeichnung der Blechnaben 15 und der Blechspeichen 16 dient der sprachlichen Unterscheidung der genannten Elemente von anderen Naben und Speichen. Eine weitergehende Bedeutung kommt dem Zusatz "Blech-" in diesem Zusammenhang nicht zu.

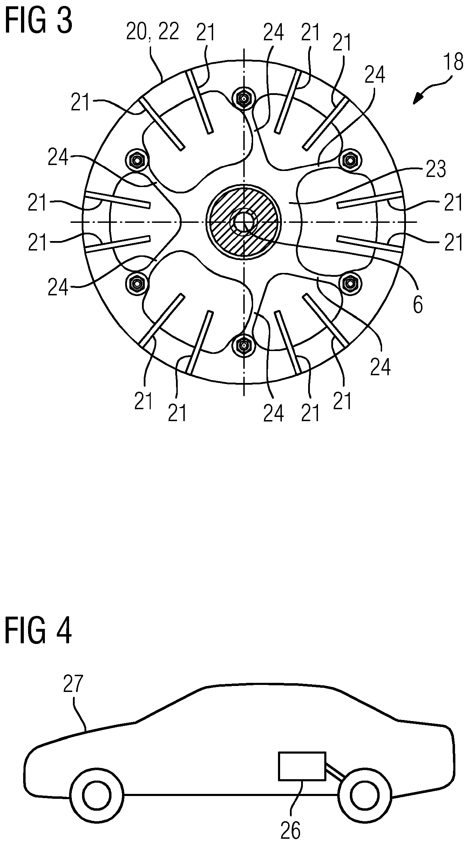

Der Lüfter 18 kann nach Bedarf ausgebildet sein. Vorzugsweise weist der Lüfter gemäß den FIG 1 und 3 eine Ringscheibe 20 als Tragelement und Lüfterflügel 21 auf. Die Ringscheibe 20 verläuft orthogonal zur Rotationsachse 6. Die Lüfterflügel 21 stehen von der Ringscheibe 20 ab. Insbesondere können sie orthogonal von der Ringscheibe 20 abstehen.

Es ist möglich, dass die Ringscheibe 20 mit einem Außenring 22 identisch ist. Der Außenring 22 ist im Wesentlichen bei dem gleichen radialen Abstand angeordnet wie die Joche 14 der Rotorbleche 9. Die Lüfterflügel 21 sind am Außenring 22 angeordnet. Gemäß FIG 3 weist die Ringscheibe 20 jedoch zusätzlich zu dem Außenring 22 eine Scheibennabe 23 auf. Der Außenring 22 ist in diesem Fall an der von der Rotationsachse 6 abgewandten Seite der Ringscheibe 20 angeordnet, die Scheibennabe 23 an der der Rotationsachse 6 zugewandten Seite der Ringscheibe 20. Der Außenring 22 und die Scheibennabe 23 sind über Scheibenspeichen 24 miteinander verbunden. Die Verwendung des Zusatzes "Scheiben-" bei der Bezeichnung der Scheibennabe 23 und der Scheibenspeichen 24 dient der sprachlichen Unterscheidung der genannten Elemente von anderen Naben und Speichen. Eine weitergehende Bedeutung kommt dem Zusatz "Scheiben-" in diesem Zusammenhang nicht zu.

Falls die Ringscheibe 20 den Außenring 22, die Scheibennabe 23 und die Scheibenspeichen 24 umfasst, entspricht die Kontur der Ringscheibe 20 vorzugsweise der eines Rotorbleches 9.

Die Scheibennabe 23 kann mit der Rotorwelle 3 drehfest verbunden sein. Vorzugsweise ist die Ringscheibe 20 jedoch derart dimensioniert, dass die Scheibennabe 23 mit der Rotorwelle 3 nicht drehfest verbunden ist. Die Scheibennabe 23 dient somit lediglich als Positionier- und Zentrierhilfe bei der Montage des Lüfters 18.

In einer Ausgestaltung sind die Lüfterflügel 21 als Blechteile ausgebildet. Auch die Ringscheibe 20 kann als Blechteil ausgebildet sein. Die Lüfterflügel 21 können beispielsweise auf die Ringscheibe 20 aufgesteckt sein. Vorzugsweise sind die Lüfterflügel 21 von radial innen nach radial außen auf die Ringscheibe 20 aufgesteckt.

Die Lüfterflügel 21 können auf beliebige Weise mit der Ringscheibe 20 verbunden sein. Vorzugsweise sind die Lüfterflügel 21 mit der Ringscheibe 20 verschweißt.

Die Lüfterflügel 21 weisen gemäß FIG 1 axial innere Abschnitte 25 und axial äußere Abschnitte auf. Ein axial äußerer Abschnitt wird auch erster Abschnitt genannt, wobei der axial innere Abschnitt auch zweiter Abschnitt genannt wird. Die axial inneren Abschnitte 25 der Lüfterflügel 21 sind gemäß FIG 1 zwischen der Ringscheibe 20 und der ersten axialen Stirnseite 7 angeordnet. Vorzugsweise ist die axiale Bauhöhe der axial inneren Abschnitte 25 derart bemessen, dass die axial inneren Abschnitte 25 unter Druckspannung an der ersten axialen Stirnseite 7 anliegen. Der Abstand der Ringscheibe 20 bzw. des Außenrings 22 von der ersten axialen Stirnseite 7 weist somit in Umfangsrichtung um die Rotationsachse 6 herum gesehen eine leichte Welligkeit auf, wobei die Minima im Bereich der Zuganker 11 und die Maxima im Bereich der Lüfterflügel 21 liegen.

Gemäß FIG 1 kann zum Beseitigen einer Unwucht auf mindestens einen der Zuganker 11 (mindestens) ein Wuchtgewicht 17 aufgesetzt sein.

Eine erfindungsgemäße elektrische Maschine kann prinzipiell für beliebige Zwecke verwendet werden. Vorzugsweise wird die elektrische Maschine gemäß FIG 4 als Traktionsmotor 26 eines Fahrzeugs 27 verwendet. Das Fahrzeug 27 kann beispielsweise als Schienenfahrzeug oder als Straßenfahrzeug ausgebildet sein.

Die elektrische Maschine nach FIG 1 zeigt, dass die Lüfterflügel 21 das Rotorblechpaket 4 stützen können. Durch die Lüfterflügel 21 kann auch eine Schwingungsdämpfung erzielt werden.

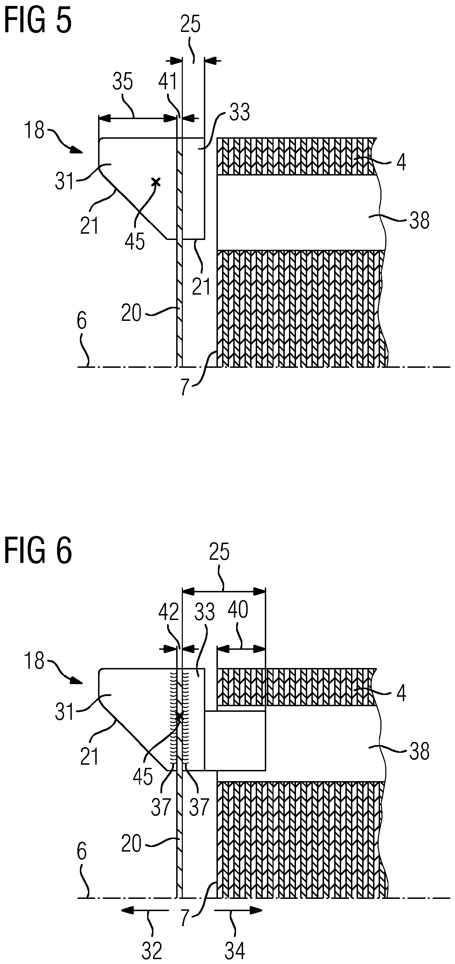

Die Darstellung gemäß FIG 5 zeigt ausschnittsweise eine nicht zur Erfindung gehörende Ausführungsform eines mit dem Rotor einer elektrischen Maschine verbundenen Lüfters 18. Gezeigt ist ein Rotorblechpaket 4 mit einem Kühlkanal 38 in einer Schnittdarstellung. Gezeigt ist ferner ein Teil eines Lüfters 18 mit einem Lüfterflügel 21. Der Lüfterflügel wird von einem Tragelement 20 getragen, welches um eine Rotationsachse 6 drehbar ist. Der Lüfterflügel 21 weist einen ersten Abschnitt 31 in einem axial äußeren Abschnitt 35 und einen zweiten Abschnitt 33 in einem axial inneren Abschnitt 25 auf. Der zweite Abschnitt 33 ist der Stirnseite 7 zugewandt. Die Massenverteilung des Lüfterflügels 21 führt zu einem Schwerpunkt 45 der Masse wie gezeigt. Je näher der Schwerpunkt 45 einem Bereich 41 rückt, desto kleiner ist eine Beanspruchung einer Verbindung zwischen dem Lüfterflügel 21 und der Ringscheibe 20. In den nachfolgenden Figuren werden Varianten einer Ausgestaltung des Lüfters 18 gezeigt. Für gleichartige Teile werden dabei gleiche Bezugszeichen verwendet.

Die Darstellung gemäß FIG 6 zeigt einen Lüfterflügel 21, welcher an dem Tragelement 20 mittels Schweißnähte 37 befestigt ist. Der erste Abschnitt 31, ausgerichtet in einer ersten axialen Richtung 32, weist eine Schweißverbindung auf und auch der zweite Abschnitt 33, ausgerichtet in einer zweiten axialen Richtung, weist eine Schweißverbindung auf. Der zweite Abschnitt 33 mit dem axial inneren Abschnitt 25 ragt in den Kühlkanal 38 hinein. Axial überschneiden sich also Kühlkanal 38 und der zweite Abschnitt 33 des Lüfterflügels 21 in einem Erstreckungsabschnitt 40. Dadurch, dass sich der zweite Abschnitt 33 in den Kühlkanal 38 erstreckt verschiebt sich im Vergleich zu FIG 5 der Schwerpunkt 45 zur Stirnseite 7 des Rotorblechpaketes 4 hin. Der Schwerpunkt 45 liegt so im Scheibenabschnittsbereich 42. Dies hat zur Folge, dass im Betrieb der elektrischen Maschine die Schweißnähte geringer belastet werden als im Fall von FIG 5.

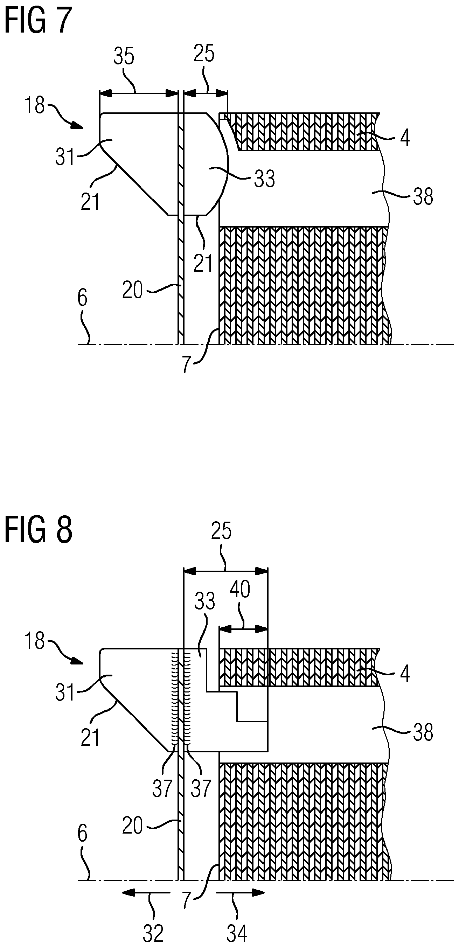

Die Darstellung gemäß FIG 7 zeigt, dass die Ausnehmung 38 sich im Endbereich des Rotorblechpaketes 4 auch erweitern kann und der zweite Abschnitt 33 sich dorthin erstreckt. Die Ausnehmung 38 in die sich der zweite Abschnitt erstreckt ist nicht notwendiger Weise ein Kühlkanal. Die Ausnehmung kann auch keinen Durchgang von einer Stirnseite zur anderen Stirnseite des Rotorblechpaketes aufweisen.

Die Darstellung gemäß FIG 8 zeigt eine gestufte Ausgestaltung des in den Kühlkanal 38 ragenden zweiten Abschnittes 33. Damit kann eine Verlagerung des Schwerpunktes zur Achse 6 hin erzielt werden.

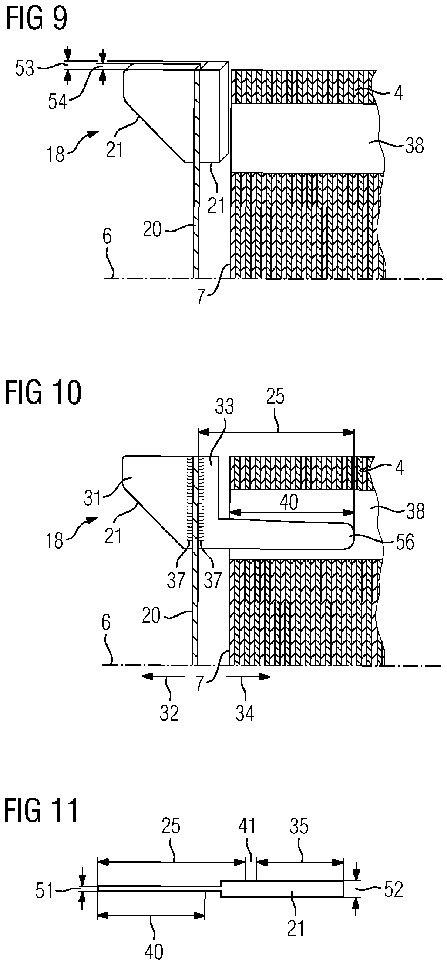

Die Darstellung gemäß FIG 9 zeigt, dass der erste Abschnitt 31 eine Dicke 54 aufweist und der zweite Abschnitt eine Dicke 53 aufweist, welche von der Dicke 54 unterschiedlich ist. Da die Dicke 53 größer ist als die Dicke 54 ist der Schwerpunkt im Vergleich zu gleichen Dicken auch verändert.

Die Darstellung gemäß FIG 10 zeigt einen zweiten Abschnitt 33 der einen Abschnitt der Erstreckung 40 aufweist, welcher länger ist als der radiale Querschnitt der Ausnehmung 38. Der zweite Abschnitt 33 weist einen Endbereich 56 auf, welcher abgerundet ist. Der Radius oder die verschiedenen Radien der Rundung sind in der Ebene, in welcher sich der zweite Abschnitt 33 in die Ausnehmung erstreckt.

Die Darstellung gemäß FIG 11 zeigt einen Lüfterflügel 21 in Aufsicht um die Dickenverhältnisse darzustellen. Der Lüfterflügel weist wie in den vorangehenden Figuren einen axial inneren Abschnitt 25 und einen axial äußeren Abschnitt auf. Dazwischen liegt der Scheibenabschnitt 41. In einem Abschnitt 40 in welchen sich der Flügel 21 in eine Ausnehmung erstreckt ist die Dicke 51 geringer als beispielsweise im axial äußeren Abschnitt, der eine vergleichsweise größere Dicke 52 aufweist.

## Patentansprüche

1. Rotor (2) einer elektrischen Maschine,
- wobei der Rotor ein Rotorblechpaket (4) aufweist,
- wobei ein Lüfter (18) stirnseitig beim Rotorblechpaket (4) angeordnet ist,
- wobei der Lüfter (18) einen Lüfterflügel (21) und ein Tragelement (20) für den Lüfterflügel (21) aufweist,
- wobei sich der Lüfterflügel (21) mit einem ersten Abschnitt (31) in einer ersten axialen Richtung (32) über das Tragelement (20) hinaus erstreckt,
- wobei sich der Lüfterflügel (21) mit einem zweiten Abschnitt (33) in einer zweiten axialen Richtung (34), welche der ersten axialen Richtung (32) entgegengesetzt ist, über das Tragelement (20) hinaus erstreckt,
**dadurch gekennzeichnet, dass** für eine Verbindung zwischen Lüfterflügel (21) und Tragelement (20) das Tragelement (20) mit dem Lüfterflügel (21) verschweißt oder verklebt ist,
- wobei der Masseschwerpunkt (45) des Lüfterflügels (21) in einem mittigen Bereich einer Klebeverbindung bzw. Schweißverbindung ist,
- wobei die Verbindung eine radiale Ausrichtung (47) aufweist und
- wobei die Masse des ersten Abschnitts (31) und die Masse des zweiten Abschnitts (33) einen Massenschwerpunkt (45) ergeben, welcher im Bereich des Tragelementes (20) liegt.

2. Rotor (2) nach Anspruch 1, **dadurchgekennzeichnet**, dass das Tragelement (20) als Ringscheibe ausgebildet ist.

3. Rotor (2) nach Anspruch 1 oder 2, **dadurch ge**- **kennzeichnet**, dass das Rotorblechpaket (4) stirnseitig Ausnehmungen (38) aufweist, in welche sich der zweite Abschnitt (33) erstreckt.

4. Rotor (2) nach Anspruch 3, **dadurch gekenn- zeichnet**, dass sich die Ausnehmung (38) von der ersten axialen Stirnseite (7) zur zweiten axialen Stirnseite (8) zur Ausbildung eines Kühlkanals erstreckt.

5. Rotor (2) nach Anspruch 4, **dadurch gekenn- zeichnet**, dass der Querschnitt des Kühlkanals (10) in dem Bereich axial unverändert ist, in dem sich der zweite Abschnitt (33) in den Kühlkanal (38) erstreckt.

6. Rotor (2) nach Anspruch 2 oder nach Anspruch 2 in Kombination mit einem der Ansprüche : 3 bis 5, **dadurch gekennzeichnet, dass** die Lüfterflügel (21) als Blechteile ausgebildet sind und auf die Ringscheibe (20) aufgesteckt sind.

7. Rotor (2) nach einem der Ansprüche 3 und 4, **dadurch gekennzeichnet, dass** der Lüfterflügel (21) außerhalb und innerhalb der Ausnehmung eine unterschiedliche Dicke (51, 52) aufweist.

8. Rotor (2) nach einem der Ansprüche 1 bis 7, **dadurch gekennzeichnet, dass** der zweite Abschnitt (33) eine Dicke (51) aufweist, welche kleiner ist als die Dicke (52) des ersten Abschnitts (31).

9. Rotor (2) nach einem der Ansprüche 1 bis 7, **dadurch gekennzeichnet, dass** der Lüfterflügel (21) einen gewölbten Endbereich (56) aufweist, wobei der Endbereich (56) in einem Abschnitt der Erstreckung (40) des zweiten Abschnitts (33) in die Ausnehmung (38)ragt.

10. Elektrische Maschine (60),
- wobei die elektrische Maschine (60) einen Stator (1) aufweist,
- wobei die elektrische Maschine (60) einen Rotor (2) nach einem der Ansprüche 1 bis 9 aufweist, und
- wobei die elektrische Maschine (60) ein Traktionsmotor (26) eines Fahrzeugs (27) ist.

## Claims

1. Rotor (2) of an electrical machine,
- wherein the rotor has a laminated rotor core (4),
- wherein a fan (18) is arranged at the end face in the laminated rotor core (4),
- wherein the fan (18) has a fan blade (21) and a supporting element (20) for the fan blade (21),
- wherein the fan blade (21) extends by way of a first section (31) beyond the supporting element (20) in a first axial direction (32) and
- wherein the fan blade (21) extends by way of a second section (33) beyond the supporting element (20) in a second axial direction (34) which is opposite the first axial direction (32),
**characterised in that** for a connection between fan blade (21) and supporting element (20), the supporting element (20) is welded or bonded to the fan blade (21),
- wherein the centre of mass (45) of the fan blade (21) is located in a central area of an adhesive bonding and/or of the welded connection,
- wherein the connection has a radial arrangement (47) and
- wherein the mass of the first section (31) and the mass of the second section (33) produce a centre of mass (45) which is located in the area of the supporting element (20) .

2. Rotor (2) according to claim 1, **characterised in that** the supporting element (20) is designed as an annular disk.

3. Rotor (2) according to claim 1 or 2,
**characterised in that** the laminated rotor core (4) has recesses (38) at the end face into which the second section (33) extends.

4. Rotor (2) according to claim 3, **characterised in that** the recess (38) extends from the first axial end face (7) to the second axial end face (8) to form a cooling channel.

5. Rotor (2) according to claim 4, **characterised in that** the cross section of the cooling channel (10) is axially unchanged in the area in which the second section (33) extends into the cooling channel (38).

6. Rotor (2) according to claim 2 or according to claim 2 in combination with one of claims 3 to 5,
**characterised in that** the fan blades (21) are designed as sheet metal parts and attached to the annular disk (20).

7. Rotor (2) according to one of claims 3 and 4,
**characterised in that** the fan blade (21) has a different thickness (51, 52) outside and inside the recess.

8. Rotor (2) according to one of claims 1 to 7,
**characterised in that** the second section (33) has a thickness (51) smaller than the thickness (52) of the first section (31).

9. Rotor (2) according to one of claims 1 to 7,
**characterised in that** the fan blade (21) has a curved end portion (56), wherein the end portion (56) protrudes into the recess (38) in a section of the extension (40) of the second section (33).

10. Electrical machine (60),
- wherein the electrical machine (60) has a stator (1),
- wherein the electrical machine (60) has a rotor (2) according to one of claims 1 to 9, and
- wherein the electrical machine (60) is a traction motor (26) of a vehicle (27).

## Revendications

1. Rotor (2) d'une machine électrique,
- dans lequel le rotor a un paquet (4) de tôles rotoriques,
- dans lequel un ventilateur (18) est disposé du côté frontal du paquet (4) de tôles rotoriques,
- dans lequel le ventilateur (18) a une ailette (21) de ventilateur et un élément (20) porteur de l'ailette (21) du ventilateur,
- dans lequel l'ailette (21) du ventilateur s'étend, par une première partie (31), dans un premier sens (32) axial, au-delà de l'élément (20) porteur,
- dans lequel l'ailette (21) du ventilateur s'étend, par une deuxième partie (33), dans un deuxième sens (34) axial, qui est contraire au premier sens (32) axial, au-delà de l'élément (20) porteur,
**caractérisé en ce que**, pour une liaison entre l'ailette (21) du ventilateur et l'élément (20) porteur, l'élément (20) porteur est soudé ou collé à l'ailette (21) du ventilateur,
- dans lequel le centre (45) de gravité de l'ailette (21) du ventilateur est dans une région médiane d'un collage ou d'un soudage,
- dans lequel la liaison a une orientation (47) radiale et
- dans lequel la masse de la première partie (31) et la masse de la deuxième partie (32) donnent un centre (45) de gravité, qui se trouve dans la région de l'élément (20) porteur.

2. Rotor (2) suivant la revendication 1, **caractérisé en ce que** l'élément (20) porteur est constitué sous la forme d'un disque annulaire.

3. Rotor (2) suivant la revendication 1 ou 2, **caractérisé en ce que** le paquet (4) de tôles rotoriques a des évidements (33) du côté frontal, dans lesquels s'étend la deuxième partie (33).

4. Rotor (2) suivant la revendication 3, **caractérisé en ce que** l'évidement (38) s'étend, pour former un conduit de refroidissement, du premier côté (7) frontal axial au deuxième côté (8) frontal axial.

5. Rotor (2) suivant la revendication 4, **caractérisé en ce que** la section transversale du conduit (10) de refroidissement est inchangée axialement dans la région, dans laquelle la deuxième partie (33) s'étend dans le conduit (38) de refroidissement.

6. Rotor (2) suivant la revendication 2 ou suivant la revendication 2 en combinaison avec l'une des revendications 3 à 5, **caractérisé en ce que** les ailettes (21) du ventilateur sont constituées sous la forme de pièces de tôle et sont enfichées sur le disque (20) annulaire.

7. Rotor (2) suivant l'une des revendications 3 et 4, **caractérisé en ce que** l'ailette (21) du ventilateur a une épaisseur (51, 52) différente à l'extérieur et à l'intérieur de l'évidement.

8. Rotor (2) suivant l'une des revendications 1 à 7, **caractérisé en ce que** la deuxième partie (33) a une épaisseur (51), qui est plus petite que l'épaisseur (52) de la première partie (31).

9. Rotor (2) suivant l'une des revendications 1 à 7, **caractérisé en ce que** l'ailette (21) du ventilateur a une région (56) d'extrémité cintrée, la région (56) d'extrémité pénétrant dans l'évidement (38) dans une partie de l'étendue (40) de la deuxième partie (33).

10. Machine (60) électrique,
- dans laquelle la machine (60) électrique a un stator (1),
- dans laquelle la machine (60) électrique a un rotor (2) suivant l'une des revendications 1 à 9, et
- dans laquelle la machine (6) électrique est un moteur (26) de traction d'un véhicule (27).
